# EUROPÄISCHE PATENTANMELDUNG

(11) **EP 2 361 940 A1**
(43) Veröffentlichungstag der Anmeldung: **31.08.2011**
(21) Anmeldenummer: 10154110.0
(22) Anmeldetag: 19.02.2010
(51) Int. Cl.: C08G 18/42, C08G 18/66

(54) **Neue Vergussmassen und deren Verwendung zur Herstellung von Elektroisolierstoffen**

(71) Anmelder: GT Elektrotechnische Produkte GmbH, 79761 Waldshut-Tiengen (DE)
(72) Erfinder: Stoycheva, Vesela, 15745 Wildau (DE); Paulmann, Uwe, 79790 Küssaberg (DE)
(74) Vertreter: Gulde Hengelhaupt Ziebig & Schneider

(57) **Zusammenfassung**

Die Erfindung betrifft neue Vergussmassen auf der Basis von Polyurethanen aus zwei Reaktionskomponenten und daraus hergestellte Elektroisolierstoffe mit verbesserten Isolationseigenschaften gegenüber herkömmlichen Produkten. Insbesondere betrifft diese Erfindung Zwei-Komponenten-Systeme, die miteinander vermischt reagieren und als Reaktionsprodukt Elektroisolierstoffe mit hoher Durchschlagspannung insbesondere für Kabelverbindungen, Kabeldurchführungen und Endverschlüsse von Kabeln ergeben. Solche Isolierstoffe werden zur Isolation von Leitern gegenüber anderen sowie gegenüber Umwelteinflüssen, insbesondere Feuchtigkeit, eingesetzt.

## Beschreibung

Die Erfindung betrifft neue Vergussmassen auf der Basis von Polyurethanen aus zwei Reaktionskomponenten und daraus hergestellte Elektroisolierstoffe mit verbesserten Isolationseigenschaften gegenüber herkömmlichen Produkten. Insbesondere betrifft diese Erfindung Zwei-Komponenten-Systeme, die miteinander vermischt reagieren und als Reaktionsprodukt Elektroisolierstoffe mit hoher Durchschlagspannung insbesondere für Kabelverbindungen, Kabeldurchführungen und Endverschlüsse von Kabeln ergeben. Solche Isolierstoffe werden zur Isolation von Leitern gegenüber anderen sowie gegenüber Umwelteinflüssen, insbesondere Feuchtigkeit, eingesetzt.

Elektroisolierstoffe für Kabel sind bekannt. Als Materialien werden z. B. Epoxydharze, Polyolefingemische, Bitumen, Silikonkautschuke oder Silikongele, verschäumbare Materialien, Fette oder Gele verwendet. Weiterhin ist es bekannt, Polyurethansysteme entweder als thermoplastische Massen, als Duromere oder deren Gemische einzusetzen. Außerdem ist bekannt, den Materialien Öle zuzusetzen; speziell den Polyestermassen werden natürliche Öle beigemischt oder den Polyolefinen Mineralöle oder Paraffinöl bis zu 80 Gew.-% des Polymeren. Weiter ist bekannt, den Materialien inerte Füllstoffe oder funktionale Füllstoffe zur Erreichung bestimmter Eigenschaften zuzusetzen.

Nach der DE 10 2008 054 940 A1 werden Polyurethan-Massen, die zum Vergießen von Kabeln in Kabelmuffen eingesetzt werden können, hergestellt aus
einem Di- und/oder Polyisocyanat,
einer Polyolkomponente, die besteht aus zu 30 bis 99 % eines linearen und/oder schwach verzweigten Polyesteralkohols mit im wesentlichen sekundären Hydroxylgruppen auf der Basis von 60 bis 99 % der Dicarbonsäuren an aromatischen Dicarbonsäuren und 1 bis 40 % an aliphatischen Dicarbonsäuren sowie 60 bis 99 % an Diolen mit einer sekundären und einer primären Hydroxylgruppe und mindestens einer Seitenkette mit mehr als 2 Kohlenstoffatomen und 1 bis 40 % eines Diols mit mindestens 2 Kohlenstoffatomen, 0,5 bis 50 % eines linearen oder schwach verzweigten aromatischen Polyesteralkohols mit wesentlichen primären Hydroxylgruppen auf der Basis von 60 bis 99 % der Dicarbonsäuren an aromatischen Dicarbonsäuren und 1 bis 40 % an aliphatischen Dicarbonsäuren sowie 60 bis 99 % an Diolen mit 2 bis 10 Kohlenstoffatomen und ggf. einem oder mehreren Sauerstoffatomen in der Kette und 1 bis 40 % eines Diols mit mindestens 2 Kohlenstoffatomen, 0,5 bis 40 % eines verzweigten Polyetheralkohols der rechnerischen Funktionalität zwischen 2,5 und 4,5 und einer Molmasse zwischen 400 und 1500 im wesentlichen aufgebaut auf einem polyfunktionellen Alkohol als Starter und Propylenoxid,
sowie aus festen Zusatzstoffen wie Natriumaluminiumsilikaten, natürlichen Zeolithen, Pigmenten, festen Flammschutzmitteln und/oder leitfähig machenden Additiven wie Graphit, Jod, Metallpulver o. ä. hergestellt.

Es werden Massen mit z. B. Durchschlagspannungen bis zu 81 kV/mm erreicht. Das weist ebenso wie die Verwendung von Weichmachern darauf hin, dass diese Vergussmassen relativ spröde sind und noch über freie Gruppen mit beweglichen Elektronen verfügen, so dass Probleme hinsichtlich der "Bäumchenbildung" und der Beständigkeit gegen Umwelteinflüsse durch Eigenschaftsänderungen über der Zeit bestehen.

Bei allen bisher bekannt gewordenen technischen Lösungen auf der Basis reiner oder mit Füllstoffen versehener Harze wurden Probleme in Bezug auf die mechanischen (z. B. elastischen oder Festigkeits-) Eigenschaften oder in Bezug auf das Isolationsverhalten beschrieben. Werden solchen Systemen Öle zugesetzt, so besteht oftmals das Problem, dass diese Öle migrieren und sich auf den Oberflächen oder Grenzflächen ansammeln und dadurch zu Fehlern Anlass sind. Werden die Harze zu spröd eingestellt, wie es z. B. bei ungefüllten E-poxydharzen oder Polystyrol bzw. dessen Copolymeren der Fall sein kann, so bilden sich die so genannten Bäume, die zu einem Verlust an elektrischen Eigenschaften und schließlich zum Versagen führen. Harzsysteme auf der Basis von Polybutadienen neigen dazu, sich mit den anderen Isolationsmaterialien, z. B. Gummi, EPDM, PVC usw., zu vermischen und diese zu schädigen. Weiterhin werden nach dem bekannt gewordenen Stand der Technik durch die verwendeten Materialien Vergussmassen für Kabel maximal bis in den Mittelspannungsbereich, d. h. bis zu einer Beständigkeit gegen Spannungen bis zu 42 kV, bereitgestellt, was für eine Reihe von Einsatzzwecken nicht hinreichend ist.

Aufgabe der Erfindung ist es deshalb, Vergussmassen zur Herstellung von Elektroisolierstoffen zur Verfügung zu stellen, welche Durchschlagspannungen über 100 kV/mm aufweisen.

Überraschend wurde gefunden, dass sich bestimmte aromatische Polyesteralkohole mit natürlichen Ölen in weiten Grenzen vermischen lassen und stabile Gemische bilden. Erfindungsgemäß wird die Aufgabe durch Vergussmassen auf der Basis von Polyurethanen aus zwei Komponenten gelöst. Sie sind dadurch gekennzeichnet, dass sie aus einer Komponente A), die im wesentlichen aus Polyesteralkoholen besteht und einer Komponente B) aus einem oder mehreren Di- und/oder Polyisocyanaten bzw. Vorpolymerisaten auf der Basis eines oder mehrerer Isocyanate hergestellt worden sind.

Erfindungsgemäß besteht die Komponente A) aus
a) einer homogenen Zusammensetzung eines oder mehrerer aromatischer Polyesteralkohole, vorzugsweise auf der Basis von Terephthalsäure, mindestens einem Diol, gegebenenfalls mindestens einer weiteren Dicarbonsäure und gegebenenfalls mindestens einem Triol, mit einer Hydroxylzahl von 220 bis 360 mg KOH/g, und
b) einem oder mehreren natürlichen Ölen, die gegebenenfalls durch Oxidation, Epoxidierung, Sulfonierung oder Spaltung chemisch modifiziert sein können,
c) gegebenenfalls Zusatzstoffen ausgewählt aus der Gruppe umfassend feste Flammschutzmittel, Pigmente und feste Füllstoffe oder Gemische dieser, sowie
d) gegebenenfalls organischen Zinn-Katalysatoren.

Die Vergussmassen weisen die Bestandteile der Komponente A) mit folgenden bevorzugten Mengen auf
- die Bestandteile a) mit 45 bis 95 Gew.-%
- die Bestandteile b) mit 55 bis 5 Gew.-% und
- die Bestandteile c) bis zu 10 Gew.-%,
wobei sich die Massen der Stoffe a) bis d) zu 100 Gew.-% addieren.

Die Komponente B) - die Di- und/oder Polyisocyanate bzw. Vorpolymerisate auf der Basis eines oder mehrerer Isocyanate - ist bevorzugt in einer Menge enthalten, dass ein Isocyanat-Index von 70 bis 160 erreicht ist.

Die eingesetzten Diole sind bevorzugt ausgewählt aus 2-Ethyl-1,3-hexandiol oder Diethylenglykol, Hexan-1,3-diol, Heptan1,5-diol, Pentan-1,3-diol und/oder Octan-1,3-diol. Das Triol ist vorzugsweise ausgewählt aus Glycerin, Hexantriol und/oder Trimethylolpropan. Die weitere Dicarbonsäure ist bevorzugt ausgewählt aus Adipinsäure, Azelainsäure oder Sebacinsäure. Als organische Zinnkatalysator können Dialkylzinnbis(thioglykolsäure-ester), Zinndioctoat, Dibutylzinndilaurat und/oder Dibutylzinndiacetat eingesetzt werden.

Besonders bevorzugt sind Vergussmassen in denen der Bestandteil a) in Komponente A) eine homogene Zusammensetzung eines oder mehrerer aromatischer Polyesteralkohole auf der Basis von Terephthalsäure und 2-Ethyl-1,3-hexandiol ist oder Vergussmassen in denen der Bestandteil a) in Komponente A) eine homogene Zusammensetzung eines oder mehrerer aromatischer Polyesteralkohole auf der Basis von Terephthalsäure, Diethylenglykol, Adipinsäure und Glycerin ist.

Bevorzugte Flammschutzmittel sind Melamin, Melamincyanurat, pulverisiertes Melaminharz und/oder ein Polyphosphat, die mit 1 bis 10 Gew.-% enthalten sein können.

Die Komponente B) - die Di- und/oder Polyisocyanate bzw. Vorpolymerisate auf der Basis eines oder mehrerer Isocyanate - liegt vorzugsweise in einer Menge vor, dass ein Isocyanat-Index von 70 bis 130 erreicht ist. Ganz besonders bevorzugt liegt der Index bei 70 bis 120, bzw. bei 80 bis 130.

Als Öle werden vorzugsweise Sojaöl, Rapsöl oder Tallöl oder deren Gemische verwendet, jedoch können auch Leinöl, Kürbiskernöl, Rübsenöl, Traubenkernöl, Hanföl usw. verwendet werden.

Weiterhin können Paraffinöle allein oder im Gemisch mit den obigen Ölen eingesetzt werden. Darüber hinaus sind Turbinenöle unterschiedlicher Zusammensetzung geeignet.

Die erfindungsgemäßen Vergussmassen werden zur Herstellung von Elektroisolierstoffen, in der Regel für Kabelverbindungen, Kabeldurchführungen und Endverschlüsse von Kabeln verwendet. Diese Elektroisolierstoffe weisen eine Durchschlagspannung im Bereich von 100 bis 250 kV/mm auf.

Die Kabelvergussmassen auf der Basis von Polyurethanen aus aromatischen Polyesteralkoholen und natürlichen Ölen, sind dadurch gekennzeichnet, dass sie im nanoskaligen Bereich und im Bereich von 1 bis 15 Mikrometer inhomogen sind.

Bevorzugte Vergussmassen werden hergestellt aus
A1) einem oder mehreren aromatischen Polyesteralkoholen auf der Basis von Terephthalsäure, mindestens einem Diol und ggf. Glycerin mit einer Hydroxylzahl von 220 bis 360 mg KOH/g,
A2) einem oder mehreren natürlichen Ölen, die ggf. chemisch modifiziert sein können,
A3) ggf. Zusatzstoffen wie festen Flammschutzmitteln, Pigmenten, festen Füllstoffen,
A4) ggf. speziellen Zinn-Katalysatoren,
B) einem oder mehreren Di- und/oder Polyisocyanaten bzw. Vorpolymerisaten auf der Basis eines oder mehrerer Isocyanate.

Insbesondere werden solche Kabelvergussmassen hergestellt, die bestehen aus:
A1) 45 bis 95 Gew.-% eines oder mehrerer aromatischer Polyesteralkohole auf der Basis von Terephthalsäure, mindestens einem Diol und ggf. Glycerin mit einer Hydroxylzahl von 220 bis 360 mg KOH/g,
A2) 55 bis 5 Gew.-% eines oder mehrerer natürlicher Öle, die ggf. chemisch modifiziert sein können,
A3) ggf. Zusatzstoffen wie festen Flammschutzmitteln, Pigmenten, festen Füllstoffen bis zu 10 Gew.-%,
A4) ggf. speziellen Zinn-Katalysatoren,
   wobei sich die Massen der Stoffe A1 bis A4 zu 100 addieren und
B) einem oder mehreren Di- und/oder Polyisocyanaten bzw. Vorpolymerisaten auf der Basis eines oder mehrerer Isocyanate in einer Menge, dass ein Isocyanat-Index von 70 bis 160 erreicht wird.

Weiterhin werden zum Beispiel flammgeschützte Kabelvergussmassen hergestellt, die bestehen aus:
A1) 45 bis 95 Gew.-% eines oder mehrerer aromatischer Polyesteralkohole auf der Basis von Terephthalsäure, mindestens einem Diol und ggf. Glycerin mit einer Hydroxylzahl von 220 bis 360 mg KOH/g,
A2) 55 bis 5 Gew.-% eines oder mehrerer natürlicher Öle, die ggf. chemisch modifiziert sein können,
A3) 1 bis 15 Gew.-% Melamin, Melamincyanurat, pulverisiertem Melaminharz oder Polyphosphat als Flammschutzmittel,
A4) ggf. speziellen Zinn-Katalysatoren,
   wobei sich die Massen der Stoffe A1 bis A4 zu 100 addieren und
B) einem oder mehreren Di- und/oder Polyisocyanaten bzw. Vorpolymerisaten auf der Basis eines oder mehrerer Isocyanate in einer Menge, dass ein Isocyanat-Index von 70 bis 120 erreicht wird.

Bevorzugt werden flammgeschützte Kabelvergussmassen bereitgestellt, die bestehen aus
A1) 45 bis 95 Gew.-% eines aromatischen Polyesteralkohols auf der Basis von Terephthalsäure und 2-Ethyl-1,3-hexandiol mit einer Hydroxylzahl von 220 bis 360 mg KOH/g,
A2) 55 bis 5 Gew.-% eines oder mehrerer natürlicher Öle, die ggf. chemisch modifiziert sein können,
A3) 1 bis 15 Gew.-% Melamin, Melamincyanurat, pulverisiertem Melaminharz oder Polyphosphat als Flammschutzmittel,
A4) ggf. speziellen Zinn-Katalysatoren,
   wobei sich die Massen der Stoffe A1 bis A4 zu 100 addieren und
B) einem oder mehreren Di- und/oder Polyisocyanaten bzw. Vorpolymerisaten auf der Basis eines oder mehrerer Isocyanate in einer Menge, dass ein Isocyanat-Index von 70 bis 130 erreicht wird.

Als Katalysatoren werden vorzugsweise zinnorganische Verbindungen vom Typ der Dialkylzinnbis(thioglykolsäureester) eingesetzt.

Besonders bevorzugt werden Kabelvergussmassen bereitgestellt, die bestehen aus
A1) 45 bis 95 Gew.-% eines aromatischen Polyesteralkohols auf der Basis von Terephthalsäure und 2-Ethyl-1,3-hexandiol mit einer Hydroxylzahl von 220 bis 360 mg KOH/g,
A2) 55 bis 5 Gew.-% eines oder mehrerer natürlicher Öle, die ggf. chemisch modifiziert sein können,
A3) ggf. Zusatzstoffen wie festen Flammschutzmitteln, Pigmenten, festen Füllstoffen bis zu 10 Gew.-%,
A4) ggf. speziellen Zinn-Katalysatoren,
   wobei sich die Massen der Stoffe A1 bis A4 zu 100 addieren und
B) einem oder mehreren Di- und/oder Polyisocyanaten bzw. Vorpolymerisaten auf der Basis eines oder mehrerer Isocyanate in einer Menge, dass ein Isocyanat-Index von 70 bis 160 erreicht wird.

Die aromatischen Polyesteralkohole, die sich mit natürlichen Ölen in weiten Grenzen vermischen lassen, bilden überraschend stabile Gemische. Beispielsweise kann ein aromatischer Polyesteralkohol auf der Basis von Terephthalsäure, Diethylenglykol und Glycerin mit einer Hydroxylzahl von 260 mg KOH/g und einer Hydroxylfunktionalität von 2,1 mit Sojaöl im Bereich von 5 bis 25 Gew.-% vermischt werden und bildet dabei ein klares, langzeitstabiles Gemisch. Weiterhin kann ein aromatischer Polyesteralkohol auf der Basis von Terephthalsäure und 2-Ethyl-1,3-hexandiol mit einer Hydroxylzahl von 270 mg KOH/g und einer Hydroxylfunktionalität von 2,0 mit Rapsöl im Bereich von 5 bis 45 Gew.-% vermischt werden und bildet dabei ein klares, langzeitstabiles Gemisch.

Diese Gemische weisen darüber hinaus eine deutlich geringere Viskosität auf, was ihre Verarbeitung als 2-Komponenten-Systeme wesentlich vereinfacht.

Die Gemische aus aromatischen Polyesteralkoholen und natürlichen Ölen, ggf. unter Zusatz weiterer Additive, Katalysatoren usw., können mit Di- oder Polyisocyanaten umgesetzt werden und ergeben dabei sehr harte und trotzdem elastische Vergussmassen mit einstellbaren Verarbeitungszeiten, die extrem gute elektrische Eigenschaften bei sehr guten mechanischen Eigenschaften aufweisen. So wurden z. B. Durchschlagspannungen bis 250 kV/mm gemessen.

Die in den Beispielen weiter beschriebenen herausragenden Eigenschaften dieser Kabelvergussmassen werden auf eine spezielle Eigenart dieser Mischungen zurückgeführt. Wie entsprechende Untersuchungen mit dem AFM gezeigt haben, findet während der Polyurethanbildung eine mehr oder weniger starke Entmischung im Mikrometer- bzw. im Nanometerbereich statt, wobei das Öl in den Maschen des chemischen und/oder physikalischen Netzwerkes des Polyurethans in Form von nanoskaligen Tröpfchen eingebaut wird. Ohne dieses, allein durch die Struktur der Komponenten erzeugte Phänomen, d. h. ohne die Nanotröpfchenbildung und ohne den Zusatz der Öle, liegen die Durchschlagspannungen der Kabelvergussmassen um mindestens 80 kV/mm niedriger als durch diesen Effekt. Weiterhin ist überraschend, dass durch diese Struktur der Glasübergangsbereich der Kabelvergussmassen nur um wenige K sinkt (z. B. von 103°C für die ölfreie Kabelvergussmasse auf 93°C für eine mit 40 % Öl gefüllte Kabelvergussmasse) und zusätzlich die Härte wenig oder gar nicht beeinflusst wird, in einigen Fällen sogar die Härte des Ausgangsmaterials übertrifft. Demgegenüber steigt die Elastizität - gemessen durch die Bruchdehnung beim Zugversuch - von 3 % auf über 15 % an, so dass trotz der hohen Shore D Härte von über 75 elastische Kabelvergussmassen erhalten werden.

Als aromatische Polyesteralkohole kommen insbesondere solche auf der Basis von Terephthalsäure in Frage, aber auch solche aus Phthalsäure oder Isophthalsäure oder deren Gemischen sowie durch Depolymerisation von Polyestern wie PET, PTT oder PBT erhaltene aromatische Polyesteralkohole. Diese aromatischen Dicarbonsäuren können zusätzlich mit aliphatischen Dicarbonsäuren, z. B. Adipinsäure oder Sebacinsäure, oder mit aromatischen Tricarbonsäuren, z. B. Trimellitsäure, modifiziert sein. Weiterhin können Destillationsrückstände aus der Herstellung dieser Säuren verwendet werden.

Die aromatischen Dicarbonsäuren bzw. deren Mischungen können mit Diolen, z. B. Ethylenglykol, Diethylenglykol, höheren homologen Ethylenglykolen bis zu einer Molmasse von 600, Neopentylglykol, 2-Ethyl-1,3-hexandiol oder Gemischen davon ggf. unter weiterem Zusatz von Triolen wie Glycerin oder Trimethylolpropan zu den aromatischen Polyesteralkohole umgesetzt werden.

Besonders geeignet für die erfindungsgemäßen Kabelvergussmassen sind aromatische Polyesteralkohole aus Terephthalsäure und 2-Ethyl-1,3-hexandiol. Dabei werden diese Komponenten gemäß der DE 10 2008 054 940 A1 zu aromatischen Polyesteralkoholen mit Hydroxylzahlen von 220 bis 360 mg KOH/g und Viskositäten von 25.000 mPas bis 3.000 mPas (25°C) umgesetzt und dann weiter mit den Ölen vermischt.

In einer besonders bevorzugten Variante der erfindungsgemäßen Kabelvergussmassen werden aromatische Polyesteralkohole, die aus Terephthalsäuredimethylester und 2-Ethyl-1,3-hexandiol in Gegenwart von metallorgischen bzw. Metallsalzkatalysatoren hergestellt werden, mit 5 bis 50 % der nativen Öle vermischt und diese Gemische mit Di- oder Polyisocyanaten umgesetzt.

Als Isocyanate werden die üblicherweise in der Polyurethanchemie verwendeten eingesetzt, z. B. Diphenylmethandiisocyanat (4,4'-, 2,4'- und/oder 2,2'-Isomere), Toluylendiisocyanat (2,4- und/oder 2,6-Isomere), 4,4'-Dicyclohexylmethandiisocyanat, Xylylendiisocyanat, I-sophorondiisocyanat usw. Weiterhin können Vorpolymerisate aus diesen Isocyanaten und Diolen, Triolen, Polyetheralkoholen, Polyesteralkoholen, α,ω-Diaminopolyethern, langkettigen Dialkylaminen usw. eingesetzt werden.

Besonders bevorzugt wird so genanntes polymeres Diphenylmethandiisocyanat mit einer Isocyanatfunktionalität zwischen 2,4 und 5,5 verwendet.

Als Katalysatoren für die Umsetzung der erfindungsgemäßen Gemische aus aromatischen Polyesteralkoholen und nativen Ölen können vorzugsweise metallorganische Verbindungen angewendet werden. Besonders geeignet sind auf Grund ihrer thermisch aktivierbaren katalytischen Eigenschaften Zinnverbindungen der Thioglykolsäure, insbesondere Dibutylzinn-bis-(thioglykolsäureester) und besonders bevorzugt Dibutylzinn-bis-(thioglykolsäure-2-ethylhexyl-ester).

Als feste Additive können z. B. feste Flammschutzmittel eingesetzt werden. Solche sind z. B. Aluminiumoxidhydrate, Aluminiumhydroxyd, Magnesiumhydroxyd, Polyphosphate, Melamin, Melamincyanurat, vermahlene Melaminharzabfälle usw. Besonders bevorzugt wird Melamincyanurat.

Weiterhin können Pigmente eingesetzt werden, z. B. Oxide des Eisens, des Titans, des Bleis oder des Kobalts. Es können auch organische Pigmente verwendet werden.

In den erfindungsgemäßen Gemischen können weiterhin bestimmte feste Füllstoffe verwendet werden, z. B. Bariumsulfat (Schwerspat), pyrogene Kieselsäure (Aerosil), Calciumsulfat, Calciumcarbonat (Kreide, Marmor), Talkum, natürliche oder synthetische Silikate, synthetisches oder natürliches Natriumaluminiumsilikat, Zeolithe, Montmorillonit, Schichtsilikate, Glimmer etc.

Überraschend ist bei den erfindungsgemäßen Kabelvergussmassen die ungewöhnliche Kombination von hohen mechanischen Festigkeiten und hoher elektrischer Isolationsfähigkeit. Als Beispiel für diese ungewöhnliche Kombination sollen die folgenden Werte einer erfindungsgemäßen Kabelvergussmasse aus einem aromatischen Polyesteralkohol auf der Basis Terephthalsäure und 2-Ethyl-1,3-hexandiol mit der Hydroxylzahl 262 mg KOH/g, 40 % Rapsöl und der stöchiometrischen Menge an polymerem Diphenylmethandiisocyanat (p-MDI) dienen:

| | |
|---|---|
| Glasübergangstemperatur: | 90°C |
| Zugfestigkeit: | 33 MPa |
| Bruchdehnung: | 8,5 % |
| Shore-D-Härte: | 75 |
| Elastizitätsmodul: | 485 MPa |
| Durchschlagspannung: | 205 kV/mm |

Die erfindungsgemäßen Kabelvergussmassen werden als Zwei-Komponenten-Systeme hergestellt. Die A-Komponente besteht dabei aus dem oder den aromatischen Polyesteralkoholen, dem oder den Ölen und den Zusatzstoffen; die B-Komponente ist das Isocyanat. Die Komponenten werden in getrennten Behältnissen dem Verarbeiter zur Verfügung gestellt. Auf Grund der niedrigen Viskosität der Gemische aus aromatischen Polyesteralkoholen und dem oder den Ölen ist eine Vermischung relativ schnell und ohne komplexe Technik, z. B. auch im Handansatz, möglich. Die Startzeit bzw. Topfzeit der vermischten Komponenten beträgt bei 20°C ohne Zusatz von Katalysatoren zwischen 12 und 30 Minuten; durch den Zusatz der erfindungsgemäßen Katalysatoren kann die Topfzeit bis auf 5 Sekunden reduziert werden. Mit der Topfzeit korreliert die Zeit bis zur Klebfreiheit, ohne Zusatz von Katalysatoren liegt diese bei ca. 3 Stunden, mit Einsatz von Katalysatoren kann sie auf 15 Minuten verkürzt werden.

Die erfindungsgemäßen Kabelvergussmassen werden insbesondere in der Elektrotechnik zum Isolieren von blanken oder entisolierten Kabeln verwendet. Diese Kabel können in Form freier Kabel vorliegen, in Muffen angeordnet sein, in die die Massen eingegeben werden, in Endstücken der Kabel eingearbeitet werden oder als einfache oder doppelte Hülle von Kabeln, Kabelbäumen, Bauelementen etc. erzeugt werden.

### Beispiele

### Beispiel 1: Herstellung der erfindungsgemäßen Mischungen aus aromatischen Polyesteralkoholen und natürlichen Ölen

Es wird ein aromatischer Polyesteralkohol, im weiteren als P53 bezeichnet, durch Umesterung von Dimethylterephthalat mit 2-Ethyl-1,3-hexandiol hergestellt. Dazu werden 2,95 kg 2-Ethyl-1,3-hexandiol in einen 6 1-Sulfierkolben gegeben, die Temperatur unter Rühren und Stickstoffschleier auf 150°C gesteigert und während der Erwärmung 0,15 g Zinndioctoat hinzugefügt. Sobald die Temperatur von 150°C erreicht ist, werden portionsweise 1,95 kg Dimethylterephthalat zugegeben, ohne dass die Temperatur 135°C unterschreitet. Innerhalb von 135 Minuten werden 626 g Methanol abdestilliert. Man erhält ein hellgelbes, klares Produkt mit überwiegend sekundären Hydroxylgruppen, der Hydroxylzahl von 268 mg KOH/g, der Säurezahl von 1,6 mg KOH/g sowie einer Viskosität von 9100 mPas (25°C).

Aus dem aromatischen Polyesteralkohol P53 und Sojaöl werden Mischungen hergestellt, die in der folgenden Tabelle zusammengestellt sind:

| Parameter | MS1-5 | MS1-10 | MS1-20 | MS1-30 | MS1-40 |
|---|---|---|---|---|---|
| P53 (%) | 95 | 90 | 80 | 70 | 60 |
| Sojaöl (%) | 5 | 10 | 20 | 30 | 40 |
| Hydroxylzahl (mg KOH/g) | 290 | 307 | 253 | 248 | 232 |
| Säurezahl (mg KOH/g) | 5.1 | 5.1 | 4.6 | 4.2 | 4.0 |
| Viskosität (25°C) (mPas) | 6,200 | 4.660 | 2,670 | 1,750 | 1,200 |

Die Gemische aus dem aromatischen Polyesteralkohol P53 und Sojaöl sind homogen und mit zunehmender Menge an natürlichem Öl absteigend weniger viskos und damit gut verarbeitbar.

Weiterhin werden aus dem aromatischen Polyesteralkohol P53 und Rapsöl Mischungen hergestellt, die in der folgenden Tabelle zusammengestellt sind:

| Parameter | MR1-5 | MR1-10 | MR1-20 | MR1-30 | MR1-40 | MR1-50 |
|---|---|---|---|---|---|---|
| P53 (%) | 95 | 90 | 80 | 70 | 60 | 50 |
| Rapsöl (%) | 5 | 10 | 20 | 30 | 40 | 50 |
| Hydroxylzahl (mg KOH/g) | 280 | 263 | 247 | 228 | 198 | 238 |
| Säurezahl (mg KOH/g) | 5.1 | 5.0 | 4.5 | 4.3 | 4.1 | 3.6 |
| Viskosität (25°C) (mPas) | 7,020 | 4.700 | 2,730 | 1,840 | 1,330 | 890 |

Die Gemische aus dem aromatischen Polyesteralkohol P53 und Rapsöl sind homogen und mit zunehmender Menge an natürlichem Öl absteigend weniger viskos und damit gut verarbeitbar.

### Beispiel 2: Herstellung der erfindungsgemäßen Kabelvergussmassen

Die unter Beispiel 1 beschriebenen erfindungsgemäßen Mischungen aus aromatischen Polyesteralkoholen und natürlichen Ölen werden mit polymerem Diphenylmethandiisocyanat (Lupranat® M20S der BASF AG) (p-MDI) bei einem Isocyanat-Index von 105 unter Formgebung zu 4 mm Platten umgesetzt. Dazu werden beide Komponenten zunächst bei Zimmertemperatur und 1 Torr 2 Stunden entgast. Die entgasten Komponenten werden in den berechneten Mengen in Aluminiumbecher eingewogen und mittels Handrührer bei 300 cm-¹ 30 Sekunden vermischt. Das Reaktionsgemisch wird dann in die PTFE-Form von 200 x 200 x 4 mm gefüllt und nach dem Verfüllen über Nacht bei Zimmertemperatur ausgehärtet. Die Zusammensetzungen und die Eigenschaften der Kabelvergussmassen sind in der folgenden Tabelle zusammengestellt.

### Beispiele 2 a bis 2f

| Beispiel | 2a | 2b | 2c | 2d | 2e | 2f |
|---|---|---|---|---|---|---|
| Parameter/Mischung | P53 | MS1-5 | MS1-10 | MS1-20 | MS1-30 | MS1-40 |
| P53-Sojaöl-Gemisch (g) | 70 | 70 | 70 | 70 | 70 | 70 |
| p-MDI (g) | 52,8 | 48.5 | 51.2 | 42.2 | 41.4 | 38.8 |
| Glasübergang DSC (°C) | 96 | 92 | 90.5 | 90 | 91 | 87 |
| Zugfestigkeit (MPa) | 26 | 51.2 | 49.2 | 45.9 | 5.9 | 3.6 |
| Bruchdehnung (%) | 4 | 9.9 | 10.0 | 11.4 | 8.5 | 1.2 |
| E- Modul (MPa) | 695 | 687 | 658 | 574 | 519 | 28 |
| Shore-D-Härte | 84 | 82 | 81 | 79 | 76 | 72 |
| Durchschlagspannung (kV/mm ) | 146 | 139 | 134 | 190 | 205 | 205 |

Wie die Beispiele 2a bis 2f zeigen, verändern sich die mechanischen Eigenschaften durch die zunehmende Menge Öl bis zu 20 % des Sojaöls im aromatischen Polyesteralkohol nur wenig. Die Festigkeit und die Bruchdehnung steigen gegenüber dem Polyurethan allein auf der Basis des aromatischen Polyesteralkohols deutlich an, die Shore-D-Härte vermindert sich nur unwesentlich. Beim Zusatz von 20 % Sojaöl im Polyolblend ist jedoch ein Umschlagspunkt für die Eigenschaften erreicht. Bei größeren Mengen Sojaöl im Gemisch vermindern sich zwar die mechanischen Eigenschaften, wenn auch die Glasübergangstemperatur nur wenig, aber die elektrischen Eigenschaften zeigen einen deutlichen Sprung zu höheren Werten. Auf Grund der AFM-Untersuchungen kann dieses Phänomen dadurch interpretiert werden, dass bis zu 10 % Sojaöl im Polyolblend praktisch homogene Harze mit der für segmentierte Polyurethane typischen Struktur erhalten werden. Im Bereich von 20 % Sojaöl im Blend liegt ein Polyurethanharz mit nanoskaligen Inhomogenitäten vor, wodurch die stark verbesserte Durchschlagspannung erklärt wird. Bei steigendem Zusatz werden zunächst größere inhomogene Bereiche festgestellt, die zwischen 200 und 2000 nm liegen. Bei 40 % Zusatz von Sojaöl im Blend sind schließlich die inhomogenen Bereiche im Mikrometerbereich. Daraus folgt, dass mittels der nanoskaligen Inhomogenitäten die mechanischen Eigenschaften weitgehend erhalten bleiben und beim Umschlag in mikroskalige Inhomogenitäten die mechanischen Eigenschaften absinken, die elektrischen Eigenschaften sich aber nochmals steigern lassen.

### Beispiele 2g bis 2l

| Beispiel | 2g | 2h | 2i | 2j | 2k | 2l |
|---|---|---|---|---|---|---|
| Parameter/ Mischung | MR1-5 | MR1-10 | MR1-20 | MR1-30 | MR1-40 | MR1-50 |
| Polyol-Öl-Mischung (g) | 80 | 80 | 80 | 80 | 80 | 80 |
| p-MDI (g) | 53.5 | 62.7 | 47.2 | 43.5 | 37.7 | 45.5 |
| Glasübergang DSC (°C) | 93 | 79 | 92 | 92 | 90 | 93 |
| Zugfestigkeit (MPa) | 16.7 | 28.3 | 35.9 | 32.1 | 33.2 | 5.0 |
| Bruchdehnung (%) | 2.5 | 5.5 | 7.8 | 7.1 | 8.5 | 1.1 |
| E-Modul (MPa) | 681 | 595 | 560 | 536 | 484 | 11 |
| Shore-D-Härte | 83 | 85 | 81 | 78 | 75 | 75 |
| Durchschlagspannung (kV/mm) | 161 | 102 | 153 | 175 | 175 | 175 |

Wie die Beispiele 2g bis 21 zeigen, verändern sich die mechanischen Eigenschaften durch die zunehmende Menge Öl bis zu 40 % des Rapsöls im aromatischen Polyesteralkohol nur wenig. Die Festigkeit und die Bruchdehnung steigen gegenüber dem Polyurethan allein auf der Basis des aromatischen Polyesteralkohols deutlich an, die Shore-D-Härte vermindert sich nur unwesentlich. Beim Zusatz von 30 % Sojaöl im Polyolblend ist jedoch ein Umschlagspunkt für die Eigenschaften erreicht. Bei größeren Mengen Rapsöl im Gemisch vermindern sich zwar die mechanischen Eigenschaften, wenn auch die Glasübergangstemperatur nur wenig, aber die elektrischen Eigenschaften zeigen einen deutlichen Sprung zu höheren Werten. Auf Grund der AFM-Untersuchungen kann dieses Phänomen dadurch interpretiert werden, dass bis zu 20 % Rapsöl im Polyolblend praktisch homogene Harze mit der für segmentierte Polyurethane typischen Struktur erhalten werden. Im Bereich von 30 bis 40 % Rapsöl im Blend liegt ein Polyurethanharz mit nanoskaligen Inhomogenitäten vor, wodurch die stark verbesserte Durchschlagspannung erklärt wird. Bei weiter steigendem Zusatz werden zunächst größere inhomogene Bereiche festgestellt, die zwischen 300 und 2000 nm liegen. Bei 50 % Zusatz von Rapsöl im Blend liegen schließlich die inhomogenen Bereiche im Mikrometerbereich. Daraus folgt, dass mittels der nanoskaligen Inhomogenitäten die mechanischen Eigenschaften weitgehend erhalten bleiben und beim Umschlag in mikroskalige Inhomogenitäten die mechanischen Eigenschaften absinken, die elektrischen Eigenschaften durch den Zusatz von größeren Mengen Rapsöl im wesentlichen aber konstant bleiben. Die Art des natürlichen Öls (seine Zusammensetzung und die Kettenlängen der Ölsäuren) haben damit nachgewiesenermaßen beträchtlichen Einfluss auf die Eigenschaften der Kabelvergussmassen. Es ist erforderlich, die Kettenlängenverteilung der Ölsäuren auf die Hydrophobie (gekennzeichnet durch die Kettenlänge der Diole bzw. deren Seitenketten) einzustellen und auf diesem Wege die Vergussmasse genau auf das Eigenschaftsprofil der speziellen Anwendung einzustellen.

### Beispiel 3: Herstellung der erfindungsgemäßen Mischungen aus aromatischen Polyesteralkoholen und natürlichen Ölen

Es wird ein aromatischer Polyesteralkohol, im weiteren als P96 bezeichnet, durch Umesterung von Polyethylenterephthalat mit Diethylenglykol, Adipinsäure und Glycerin hergestellt. Dazu werden 2,55 kg Diethylenglykol in eine 10 1-Miniplant gegeben, die Temperatur unter Rühren und Stickstoffschleier auf 210°C gesteigert und während der Erwärmung 0,1 g Titantetrabutylat hinzugefügt. Sobald die Temperatur von 210°C erreicht ist, werden portionsweise 1,41 kg Adipinsäure zugegeben, ohne dass die Temperatur 200°C unterschreitet. Innerhalb von 50 Minuten werden 106 g Wasser abdestilliert. Die Temperatur wird langsam auf 230°C gesteigert. Danach werden 0,21 kg Glycerin und 2,83 kg PET derart zugefügt, dass die Temperatur 220°C nicht unterschreitet. Anschließend wird die Temperatur auf 250°C erhöht und dort gehalten. Innerhalb von 5 Stunden werden weitere 390 g Destillat erhalten. Man erhält nach dem Abkühlen ein hellgelbes, klares Produkt mit überwiegend primären Hydroxylgruppen, der Hydroxylzahl von 280 mg KOH/g, der Säurezahl von 0,6 mg KOH/g sowie einer Viskosität von 5600 mPas (25°C).

Aus dem aromatischen Polyesteralkohol P96 und verschiedenen Ölen werden Mischungen hergestellt, die in der folgenden Tabelle zusammengestellt sind:

| Parameter | MP96-5 | MR96-7 | MS96-7 |
|---|---|---|---|
| BB96 (%) | 95 | 92,5 | 92,5 |
| Paraffinöl (%) | 5 | - | - |
| Rapsöl (%) | - | 7,5 | - |
| Sojaöl (%) | - | - | 7,5 |
| Hydroxylzahl (mg KOH/g) | 220 | 217 | 216 |
| Säurezahl (mg KOH/g) | 0.6 | 0.6 | 0.6 |
| Viskosität (25°C) (mPas) | 3.000 | 2.780 | 2.840 |

Bei Verwendung eines hydrophileren aromatischen Polyesteralkohols, bei dem das hydrophile Diol Diethylenglykol und zusätzlich die hydrophil wirkende Adipinsäure eingesetzt werden, können stabile Polyolblends mit den Ölen nur bis maximal 10 % Öl im Blend hergestellt werden. Auch ist die Reduktion der Viskosität bei weitem geringer als im Falle des aromatischen Polyesteralkohols auf der Basis des 2-Ethyl-1,3-hexandiols.

### Beispiel 4: Herstellung der erfindungsgemäßen Kabelvergussmassen

Die unter Beispiel 3 beschriebenen erfindungsgemäßen Mischungen aus aromatischen Polyesteralkoholen und natürlichen Ölen werden mit polymerem Diphenylmethandiisocyanat (Lupranat® M20S der BASF AG) (p-MDI) bei einem Isocyanat-Index von 103 unter Formgebung zu 4 mm Platten umgesetzt. Dazu werden beide Komponenten zunächst bei Zimmertemperatur und 1 Torr 2 Stunden entgast. Die entgasten Komponenten werden in den berechneten Mengen in Aluminiumbecher eingewogen und mittels Handrührer bei 300 cm-¹ 30 Sekunden vermischt. Das Reaktionsgemisch wird dann in die PTFE-Form von 200 x 200 x 4 mm gefüllt und nach dem Verfüllen über Nacht bei Zimmertemperatur ausgehärtet. Die Zusammensetzungen und die Eigenschaften der Kabelvergussmassen sind in der folgenden Tabelle zusammengestellt.

| Parameter | T_{g} (DSC) (°C) | Zugfestigkeit (MPa) | Bruchdehnung (%) | E-Modul (MPa) | Shore-D-Härte | Durchschlagspannung (kV/mm) |
|---|---|---|---|---|---|---|
| Beispiel | | | | | | |
| 4a) BB59 + p-MDI | 48 | 32 | 1,2 | 876 | 77 | 89 |
| 4 b) MP96-5 + p-MDI | 47 | 22 | 2,0 | 588 | 74 | 105 |
| 4 c) MR96-7 + p-MDI | 47 | 34 | 2,9 | 698 | 75 | 112 |
| 4 d) MS96-7 + p-MDI | 46 | 31 | 2,8 | 712 | 76 | 121 |

Wie die Werte der Beispiele 4 a bis 4 d zeigen, wird trotz der geringen Menge an eingearbeiteten Ölen in den hydrophileren aromatischen Polyesteralkohol eine deutliche Erhöhung der elektrischen Isolationswirkung erzielt, die wiederum nur durch die Ausbildung von nanoskaligen Inhomogenitäten, die durch AFM-Untersuchungen nachgewiesen wurden, erklärt werden kann.

### Beispiel 5: Herstellung von flammqeschützten Kabelvergussmassen

Die im Beispiel 1 als MR-40 beschriebene erfindungsgemäße Mischung aus aromatischem Polyesteralkohol P53 und Rapsöl wird mit den in der Tabelle angegebenen Mengen an Melamin, Melamincyanurat bzw. Melaminharzpulver versetzt und mittels mechanischem Rührer homogenisiert. Die so erhaltenen Gemische werden mit polymerem Diphenylmethandiisocyanat (Lupranat® M20S der BASF AG) (p-MDI) bei einem Isocyanat-Index von 103 unter Formgebung zu 4 mm Platten umgesetzt. Dazu werden beide Komponenten zunächst bei Zimmertemperatur und 1 Torr 2 Stunden entgast. Die entgasten Komponenten werden in den berechneten Mengen in Aluminiumbecher eingewogen und mittels Handrührer bei 300 cm-¹ 30 Sekunden vermischt. Das Reaktionsgemisch wird dann in die PTFE-Form von 200 x 200 x 4 mm gefüllt und nach dem Verfüllen über Nacht bei Zimmertemperatur ausgehärtet. Die Zusammensetzungen und die Eigenschaften der Kabelvergussmassen sind in der folgenden Tabelle zusammengestellt.

| Beispiel | 5a | 5b | 5c | 5d | 5e | 5f |
|---|---|---|---|---|---|---|
| Polyol-Öl-Mischung (g) | 80 | 80 | 80 | 80 | 80 | 80 |
| Melamin (g) | 4 | 8 | - | - | - | - |
| Melamincyanurat (g) | - | - | 5 | 10 | - | - |
| Melaminharzpulver (g) | - | - | - | - | 4,5 | 10 |
| p-MDI (g) | 35,8 | 34.0 | 35.4 | 33.0 | 36.4 | 33.1 |
| Glasübergang DSC (°C) | 91 | 90 | 92 | 90 | 91 | 93 |
| Zugfestigkeit (MPa) | 26.5 | 24.8 | 33.3 | 32.4 | 33.9 | 31.0 |
| Bruchdehnung (%) | 6,5 | 5,5 | 7,5 | 7,0 | 7,5 | 6,3 |
| Shore-D-Härte | 78 | 80 | 80 | 82 | 81 | 83 |
| Durchschlagspannung (kV/mm) | 171 | 172 | 183 | 185 | 185 | 193 |
| LOI (%O₂) | 22,0 | 23,1 | 24,2 | 25,1 | 22,2 | 22,9 |

Wie die ermittelten LOI-Werte zeigen, wird die Brennbarkeit der erfindungsgemäßen Kabelvergussmassen gegenüber den ungefüllten Massen, deren LOI-Werte zwischen 19,2 und 20,0 liegen, deutlich verbessert. Durch die Einarbeitung von nur 10 Gew.-% Melamincyanurat in das erfindungsgemäße Polyesteralkohol-Öl-Blend werden LOI-Werte erreicht, die die Kabelvergussmassen selbstverlöschend machen und damit in eine bessere Brandklasse einzuordnen sind.

## Patentansprüche

1. Vergussmassen zur Herstellung von Elektroisolierstoffen auf der Basis von Polyurethanen aus zwei Komponenten, **dadurch gekennzeichnet, dass** sie hergestellt sind aus einer Komponente A), die im wesentlichen aus Polyesteralkoholen besteht und einer Komponente B) aus einem oder mehreren Di- und/oder Polyisocyanaten bzw. Vorpolymerisaten auf der Basis eines oder mehrerer Isocyanate,
wobei die Komponente A) besteht aus
a) einer homogenen Zusammensetzung eines oder mehrerer aromatischer Polyesteralkohole, mindestens einem Diol, gegebenenfalls mindestens einer weiteren Dicarbonsäure und gegebenenfalls mindestens einem Triol, mit einer Hydroxylzahl von 220 bis 360 mg KOH/g, und
b) einem oder mehreren natürlichen Ölen, die gegebenenfalls durch Oxidation, Epoxidierung, Sulfonierung oder Spaltung chemisch modifiziert sein können,
c) gegebenenfalls Zusatzstoffen ausgewählt aus der Gruppe umfassend feste Flammschutzmittel, Pigmente und feste Füllstoffe oder Gemische dieser, sowie
d) gegebenenfalls organische Zinn-Katalysatoren.

2. Vergussmassen nach Anspruch 1, **dadurch gekennzeichnet, dass** die aromatischen Polyesteralkohole Polyesteralkohole auf der Basis von Terephthalsäure sind, aus Phthalsäure oder Isophthalsäure oder deren Gemischen gewonnen wurden, sowie durch Depolymerisation von Polyestern erhaltene aromatische Polyesteralkohole darstellen.

3. Vergussmassen nach Anspruch 1 oder 2, **dadurch gekennzeichnet, dass** die Komponente A)
- die Bestandteile a) mit 45 bis 95 Gew.-% der
- die Bestandteile b) mit 55 bis 5 Gew.-% und
- die Bestandteile c) bis zu 10 Gew.-% umfasst,
wobei sich die Massen der Stoffe a) bis d) zu 100 Gew.-% addieren, und B) die Di- und/oder Polyisocyanate bzw. Vorpolymerisate auf der Basis eines oder mehrerer Isocyanate in einer Menge enthalten sind, dass ein Isocyanat-Index von 70 bis 160 erreicht ist.

4. Vergussmassen nach einem der Ansprüche 1 bis 3, **dadurch gekennzeichnet, dass** das Diol ausgewählt ist aus 2-Ethyl-1,3-hexandiol oder Diethylenglykol, Hexan-1,3-diol, Heptan1,5-diol, Pentan-1,3-diol und/oder Octan-1 ,3-diol.

5. Vergussmassen nach einem der Ansprüche 1 bis 4, **dadurch gekennzeichnet, dass** das Triol ausgewählt ist aus Glycerin, Hexantriol und/oder Trimethylolpropan.

6. Vergussmassen nach einem der Ansprüche 1 bis 5, **dadurch gekennzeichnet, dass** die Dicarbonsäure ausgewählt ist aus Adipinsäure, Azelainsäure, Sebacinsäure.

7. Vergussmassen nach einem der Ansprüche 1 bis 6, **dadurch gekennzeichnet, dass** der organische Zinnkatalysator ausgewählt ist aus Dialkylzinnbis(thioglykolsäure-ester), Zinndioctoat, Dibutylzinndilaurat und/oder Dibutylzinndiacetat.

8. Vergussmassen nach einem der Ansprüche 1 bis 7, **dadurch gekennzeichnet, dass** der Bestandteil a) in Komponente A) eine homogene Zusammensetzung eines oder mehrerer aromatischer Polyesteralkohole auf der Basis von Terephthalsäure und 2-Ethyl-1,3-hexandiol ist.

9. Vergussmassen nach einem der Ansprüche 1 bis 7, **dadurch gekennzeichnet, dass** der Bestandteil a) in Komponente A) eine homogene Zusammensetzung eines oder mehrerer aromatischer Polyesteralkohole auf der Basis von Terephthalsäure, Diethylenglykol, Adipinsäure und Glycerin ist.

10. Vergussmassen nach einem der Ansprüche 1 bis 9, **dadurch gekennzeichnet, dass** die Komponente A) als Flammschutzmittel
c) 1 bis 10 Gew.-% Melamin, Melamincyanurat, pulverisiertes Melaminharz und/oder ein Polyphosphat enthält.

11. Vergussmassen nach einem der Ansprüche 1 bis 10, **dadurch gekennzeichnet, dass** die Komponente B) die Di- und/oder Polyisocyanate bzw. Vorpolymerisate auf der Basis eines oder mehrerer Isocyanate - in einer Menge aufweist, dass ein Isocyanat-Index von 70 bis 130, vorzugsweise von 70 bis 120, erreicht ist.

12. Vergussmassen nach einem der Ansprüche 1 bis 11, **dadurch gekennzeichnet, dass** das natürliche Öl ausgewählt ist aus der Gruppe umfassend Rapsöl, Sojaöl, Tallöl, Kokosöl, Leinöl, Kürbiskernöl, Rübsenöl, Traubenkernöl, Hanföl, Paraffinöle und/oder Turbinenöle.

13. Homogene Zusammensetzungen aus Polyesteralkoholen und natürlichen Ölen bestehend aus
- 45 bis 95 Gew.-% eines oder mehrerer aromatischer Polyesteralkoholen auf der Basis von Terephthalsäure, mindestens einem Diol, ggf. einer Dicarbonsäure und ggf. einem Triol, mit einer Hydroxylzahl von 220 bis 360 mg KOH/g und
- 55 bis 5 Gew.-% eines oder mehrerer natürlicher Öle, die ggf. chemisch modifiziert sein können,
deren Viskosität zwischen 3000 und 500 mPas bei 25°C liegt.

14. Verfahren zur Herstellung von Vergussmassen gemäß einem der Ansprüche 1 bis 12, **dadurch gekennzeichnet, dass** die Komponenten A) und B) bei einem Isocyanatindex von 70 bis 160, vorzugsweise von 80 bis 130, unter Vermischung und Formgebung umgesetzt werden.

15. Verwendung einer Vergussmasse gemäß einem der Ansprüche 1 bis 12 zur Herstellung von Elektroisolierstoffen (Kabel), vorzugsweise zur Herstellung von Elektroisolierstoffen mit einer Durchschlagspannung im Bereich von 100 bis 250 kV/mm.
